# EUROPÄISCHE PATENTSCHRIFT

(11) **EP 1 442 243 B1**
(45) Veröffentlichungstag und Bekanntmachung des Hinweises auf die Patenterteilung: **31.08.2005**
(21) Anmeldenummer: 02787594.7
(22) Anmeldetag: 07.11.2002
(51) Int. Cl.: F16L 3/10

(54) **HALTER FÜR EINEN KÖRPER UND BEFESTIGUNGSANORDNUNG MIT EINEM DERARTIGEN HALTER**
HOLDER FOR A BODY AND A FASTENING ASSEMBLY ASSOCIATED WITH SAID HOLDER
ATTACHE DESTINEE A UN CORPS ET ENSEMBLE DE FIXATION ASSOCIE A UNE ATTACHE DE CE TYPE

(30) Priorität: 08.11.2001 DE 10155735
(43) Veröffentlichungstag der Anmeldung: 04.08.2004
(73) Patentinhaber: Newfrey LLC, Delaware 19711 (US)
(72) Erfinder: SCHÄTY, Harald, 355578 Wetzlar (DE)
(74) Vertreter: Haar, Lucas Heinz Jörn
(86) Internationale Anmeldenummer: PCT/EP2002/012443
(87) Internationale Veröffentlichungsnummer: WO 2003/040603

(56) Entgegenhaltungen:
- EP-A- 0 713 039
- WO-A-98/51953
- DE-C- 635 321
- FR-E- 95 704
- US-A- 4 029 276

## Beschreibung

Die vorliegende Erfindung betrifft einen Halter für einen Körper, vorzugsweise für einen Kraftstoff-Filter für ein Kraftfahrzeug, mit zwei Armen, die dazu ausgelegt sind, den Körper zusammen zu umschließen, wobei die Arme an ihrem jeweiligen ersten Ende mittels einer ersten Verbindung und an ihrem jeweiligen zweiten Ende mittels einer zweiten Verbindung formschlüssig miteinander verbindbar sind, und mit Befestigungsmitteln, um die miteinander verbundenen, den Körper einschließenden Arme an einem Rahmen, vorzugsweise an dem Kraftfahrzeug, festzulegen siehe WO 03/0 406 03A.

Ferner betrifft die vorliegende Erfindung eine Befestigungsanordnung mit einem Metallbolzen, der gegenüber einem Metallblech vorsteht und an dem ein Halter für einen Körper festgelegt ist.

Derartige Halter und Befestigungsanordnungen sind allgemein bekannt.

Es ist bspw. bekannt, einen Halter für Kraftstoff-Filter als mehrteilige Schelle aus Stahlblech auszubilden. Dieser bekannte Halter ist jedoch zum einen relativ teuer, zum anderen ist seine Montage vergleichsweise aufwendig.

Bei den bekannten eingangs genannten Befestigungsanordnungen wird ein Metallbolzen auf ein Karosserieblech aufgeschweißt, im sogenannten Lichtbogen-Kurzzeitschweißen, auch Bolzenschweißen genannt. Die Metallbolzen können Gewindebolzen, T-Bolzen, sog. "Tannenbaum"-Bolzen etc. sein. Derartige Bolzen sind universell verwendbar. Es können unterschiedlichste Arten von Haltern, insbesondere Kunststoff-Clips daran festgelegt werden.

Vor dem obigen Hintergrund besteht das der Erfindung zugrundeliegende Problem darin, einen verbesserten Halter für Körper, vorzugsweise für Kraftstoff-Filter, und eine entsprechend verbesserte Befestigungsanordnung anzugeben.

Diese Aufgabe wird bei dem eingangs genannten Halter dadurch gelöst, daß die Befestigungsmittel eine Öffnung in den Armen aufweisen, die im Bereich der ersten Verbindung angeordnet ist und in die ein Befestigungselement einführbar ist, das mit dem Rahmen verbindbar ist und mittels dessen die erste Verbindung gegen Lösen gesichert werden kann.

Auf diese Weise kann erreicht werden, daß die erste Verbindung zwischen den Armen gegen Lösen gesichert werden kann und ferner eine Verbindung des Halters mit einem Rahmen effektiv realisiert werden kann.

Ferner wird die obige Erfindung durch eine Befestigungsanordnung, wie eingangs genannt, gelöst, wobei der Halter ein erfindungsgemäßer Halter ist und der Metallbolzen in die Öffnung in den Armen eingeführt ist.

Von besonderem Vorzug ist es, wenn die Arme jeweils aus Kunststoff hergestellt sind. Auf diese Weise ist der Halter wesentlich kostengünstiger herstellbar als ein Halter mit Armen aus Stahlblech. Dabei ist es besonders bevorzugt, wenn die Arme im Spritzgußverfahren hergestellt sind.

Von besonderem Vorzug ist es, wenn Mittel zum Herstellen der ersten oder der zweiten Verbindung der Arme gemeinsam mit den Armen in einem einzigen Formgebungsvorgang, insbesondere Spritzgußvorgang, hergestellt sind, derart, daß die Arme nach dem Formgebungsvorgang unlösbar miteinander gekoppelt sind. Hierdurch verringert sich insbesondere die Teileanzahl des Halters. Nach dem Herstellen der Arme sind diese unlösbar miteinander gekoppelt und folglich als ein Teil handhabbar.

Dabei ist es besonders bevorzugt, wenn die Mittel zum Herstellen der ersten oder der zweiten Verbindung der Arme durch ein Gelenk gebildet sind, das gemeinsam mit den Armen in einem einzigen Formgebungsvorgang, insbesondere Spritzgußvorgang, hergestellt ist. Diese Ausführungsform ermöglicht zum einen eine Verringerung der Teilezahl des Halters. Ferner erfüllen die Mittel zum unlösbaren Verbinden der Arme gleichzeitig die Funktion eines Gelenkes zum Öffnen und Schließen der Arme, so daß der Halter leichter an dem Körper montierbar ist.

Insbesondere hierbei ist es von besonderem Vorzug, wenn ein Gelenk die erste Verbindung bildet und die zweite Verbindung eine Rastverbindung ist.

Dadurch, daß bei dem erfindungsgemäßen Halter die erste Verbindung durch eine Öffnung in den Armen gegen Lösen gesichert werden kann, kann die erste Verbindung vorteilhafterweise als ein Gelenk gebildet sein, das gemeinsam mit den Armen in einem einzigen Formgebungsvorgang hergestellt ist. Zwar sind derartige Gelenke an sich nicht zur Aufnahme hoher Lasten geeignet. Durch die zusätzlichen Sicherungsmittel in Form der Öffnung in den Armen im Bereich des Gelenkes kann der Halter insgesamt dennoch vergleichsweise hohe Lasten aufnehmen und insbesondere einen Kraftstoff-Filter eines Kraftfahrzeuges halten.

Die zweite Verbindung ist dabei vorzugsweise eine Rastverbindung, die bereits an sich für hohe Lasten ausgelegt sein kann.

Gemäß einer alternativen Ausführungsform sind die Arme in getrennten Formgebungsvorgängen hergestellt, und die Form der zwei Arme ist identisch. Auch bei dieser Ausführungsform ist die Anzahl der logistisch zu erfassenden Teile verringert. Zwar sind die Arme nach dem Formgebungsvorgang nicht unlösbar miteinander gekoppelt, und folglich ist die Teileanzahl als solche höher. Da die Teile (die Arme) jedoch identisch sind, verringern sich die Kosten für Lagerhaltung etc.

Ferner ist es bevorzugt, wenn die Arme an ihrer zu dem Körper hin weisenden Seite wenigstens teilweise mit einem Belag ausgestattet sind. Dies ermöglicht, das Material der Arme an sich überwiegend nach Festigkeitsgesichtspunkten zu wählen. Die Wahl des Materials des Belags kann weitestgehend unabhängig hiervon gewählt werden und bspw. an die Oberfläche des Körpers angepaßt werden. Dies ist insbesondere dann vorteilhaft, wenn, wie oben erwähnt, die erste Verbindung durch ein Gelenk und die zweite Verbindung durch eine Rastverbindung realisiert ist. Denn dann ist es möglich, den Halter an dem Körper vorzumontieren, indem die Arme um den Körper geschlossen und die Rastverbindung eingerastet wird. Durch eine geeignete Auswahl des Belages ist es möglich, den Halter durch Reibung an dem Körper zu fixieren.

Dabei ist es von besonderem Vorzug, wenn der Belag aus einem Kunststoff hergestellt ist, der vorzugsweise elastischer ist als ein Material, aus dem die Arme hergestellt sind. Durch die Elastizität ist es möglich, den Körper in dem Halter in dem vormontierten Zustand "einzuspannen".

Ferner hat der Belag dann eine dämpfende Wirkung, was insbesondere von Vorteil ist beim Lagern eines Körpers an einem beweglichen oder vibrierenden Rahmen wie einem Kraftfahrzeug.

Ferner ist es bevorzugt, wenn die Arme und der Belag in einem einzigen Formgebungsvorgang, insbesondere einem Zwei-Komponenten-Spritzgußvorgang hergestellt sind.

Die Zwei-Komponenten-Spritzgußtechnik ist an sich bekannt. Mit dieser ist es möglich, einen vergleichsweise elastischen Belag an Armen aus einem vergleichsweise festen und damit unelastischem Material in einem einzigen Formgebungsvorgang anzubringen.

Insgesamt ist es ferner bevorzugt, wenn die Öffnung zur Aufnahme eines Befestigungselementes zwischen der ersten Verbindung und dem Teil der Arme angeordnet ist, der den Körper umschließt.

Hierdurch ist gewährleistet, daß Kräfte, die von dem Körper auf die Arme ausgeübt werden (bspw. durch Vibrationen oder ähnliches) auf der Seite der ersten Verbindung durch die Befestigungsmittel aufgenommen werden, so daß die erste Verbindung als solche gegenüber derartigen Kräften entlastet wird.

Bei der erfindungsgemäßen Befestigungsanordnung ist es von Vorzug, wenn die Öffnung durchgehend durch beide Arme hindurch ausgebildet ist, wenn ferner der Metallbolzen ein Gewindebolzen, insbesondere ein Grobgewindebolzen ist, und wenn der Halter an dem Metallbolzen durch eine Mutter gesichert ist, die auf ein gegenüber der Öffnung vorstehendes Ende des Gewindebolzens aufgebracht ist. Bei dieser Anordnung ist gewährleistet, daß die Arme im Bereich der ersten Verbindung fest miteinander verbunden werden. Die erste Verbindung wird auf diese Weise gegen Lösen gesichert.

Dabei ist es besonders bevorzugt, wenn die Mutter eine Kunststoffmutter, vorzugsweise eine glasfaserverstärkte Kunststoffmutter ist.

Ausführungsbeispiele der Erfindung sind in der Zeichnung dargestellt und werden in der nachfolgenden Beschreibung näher erläutert.

Es zeigen:
- Fig. 1: eine schematische Querschnittsansicht einer ersten Ausführungsform einer erfindungsgemäßen Befestigungsanordnung;
- Fig. 2: eine schematische Darstellung eines erfindungsgemäßen Halters gemäß einer zweiten Ausführungsform;
- Fig. 3: eine Detailansicht einer erfindungsgemäßen Befestigungsanordnung gemäß einer dritten Ausführungsform;
- Fig. 4: eine perspektivische Ansicht einer Befestigungsanordnung gemäß einer vierten Ausführungsform, teilweise in Explosionsdarstellung;
- Fig. 5: eine perspektivische Detailansicht einer Rastverbindung des Halters der Befestigungsanordnung der Fig. 4; und
- Fig. 6: eine perspektivische Detailansicht des Bereichs der ersten Verbindung des Halters der Befestigungsanordnung der Fig. 4.

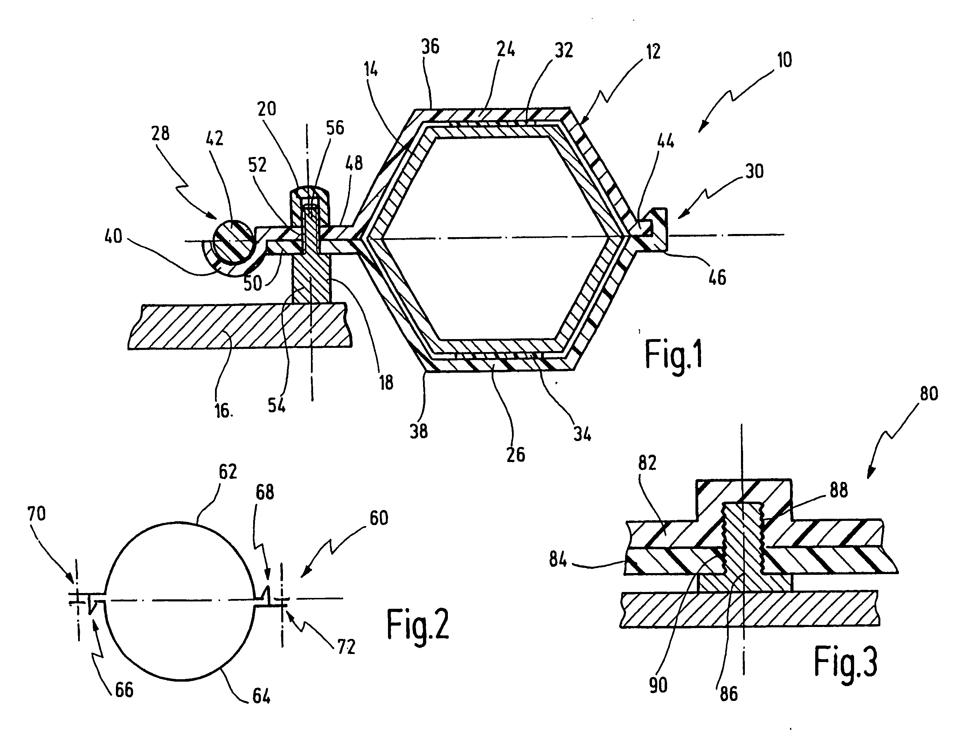

In Fig. 1 ist eine Befestigungsanordnung gemäß einer ersten Ausführungsform der Erfindung generell mit 10 bezeichnet.

Die Befestigungsanordnung weist einen Halter 12 für einen Körper 14 in Form eines Sechseck-Rohrs auf.

Der Körper 14 wird mittels des Halters 12 an einem Rahmen 16, bspw. einem Metallblech angebracht. Die Befestigungsanordnung 10 umfaßt zu diesem Zweck einen Metallbolzen 18, der im Bolzenschweißverfahren auf das Metallblech 16 aufgeschweißt ist. Ferner beinhaltet die Befestigungsanordnung 10 eine Kunststoffmutter 20, die den Halter 12 an dem Metallbolzen 18 festlegt.

Die Kunststoffmutter 20 kann eine glasfaserverstärkte Kunststoffmutter sein.

Der Halter 12 weist zwei Arme 24, 26 auf, die jeweils aus Kunststoff hergestellt sind, vorzugsweise aus dem gleichen Kunststoff.

Die zwei Arme 24, 26 sind im Bereich einer ersten Verbindung 28 in Form eines Gelenks und im Bereich einer zweiten Verbindung 30 in Form einer Rastverbindung miteinander verbunden.

Die Arme 24, 26 umschließen den Körper 14. Dabei sind die erste und die zweite Verbindung 28, 30 um 180° voneinander beabstandet, so daß die zwei Arme 24, 26 den Körper 14 jeweils etwa zur Hälfte umschließen. Es sind jedoch auch andere Verhältnisse denkbar. So kann bspw. der erste Arm 24 den Körper 14 um 270° umschließen, der zweite Arm 26 lediglich um 90°.

Die Form der Arme 24, 26 ist im Bereich ihrer den Körper 14 umschließenden Greifabschnitte 36, 38 an die Form des Körpers 14 angepaßt. So weist jeder der Arme 24, 26 in der in Fig. 1 dargestellten Querschnittsansicht etwa die Form eines Trapez ohne Boden auf.

An der Innenseite der Greifabschnitte 36, 38 sind die Arme 24, 26 jeweils mit einem elastischen Belag 32, 34 versehen. Bei dem Halter 12 sind die elastischen Beläge 32, 34 jeweils lediglich im Bereich eines Teils des Greifabschnittes 36, 38 vorgesehen, und zwar so, daß die Arme 24, 26 im geschlossenen Zustand den Körper 14 zwischen sich elastisch "einspannen".

Der Arm 24 weist einen ersten Verbindungsabschnitt 40 etwa in der Form eines halbierten Hohlzylinders auf. Der Arm 26 weist einen ersten Verbindungsabschnitt 42 in Form eines Vollzylinders mit kleinerem Durchmesser auf, der drehbar im Inneren des halbierten Hohlzylinders 40 angeordnet ist. Dabei ist in dem Verbindungsabschnitt 40 eine nicht dargestellte Durchbrechung vorgesehen, durch die ein Steg des zweiten Armes 26 greift, an dem der Vollzylinder 42 angeformt ist.

Die Verbindungsabschnitte 40, 42 bilden gemeinsam die erste Verbindung 28 in Form eines Gelenkes. Die Arme 24, 26 können mittels des Gelenkes geöffnet und geschlossen werden, um so den Körper 14 zunächst aufzunehmen und anschließend zu umschließen.

Der erste Arm 24 weist ferner einen zweiten Verbindungsabschnitt 44 in Form einer Rastnase auf. Der zweite Arm 26 weist einen zweiten Verbindungsabschnitt 46 in Form eines Rasthakens auf. Die Rastnase 44 ist dazu ausgelegt, in den Rasthaken 46 einzurasten. Folglich bilden der zweite Verbindungsabschnitt 44 und der zweite Verbindungsabschnitt 46 gemeinsam die zweite Verbindung 30 in Form einer Rastverbindung. Die Rastverbindung wird im wesentlichen auf Zug belastet und kann daher für diese Belastung eine hohe Stabilität aufweisen.

Nachdem der Körper 14 in die mittels der Gelenkverbindung 28 geöffneten Arme 24, 26 eingeführt ist, können die Arme 24, 26 um den Körper 14 herum geschlossen werden, bis die Rastnase 44 in den Rasthaken 46 einrastet. Hierbei spannen die elastischen Beläge 32, 34 den Körper 14 zwischen den Armen 24, 26 ein. Aufgrund der Reibwirkung zwischen den Belägen 32, 34 und dem Körper 14 bilden der Halter 12 und der Körper 14 folglich eine vormontierte Einheit, die als solche gelagert und im Ganzen montiert werden kann.

Der erste Arm 24 weist zwischen seinem Greifabschnitt 36 und seinem ersten Verbindungsabschnitt 40 einen Befestigungsabschnitt 48 auf. Entsprechend weist der zweite Arm 26 einen zweiten Befestigungsabschnitt 50 zwischen seinem Greifabschnitt 38 und seinem ersten Verbindungsabschnitt 42 auf. Die Befestigungsabschnitte 48, 50 sind als gerade Stege ausgebildet, die im eingerasteten Zustand der zweiten Verbindung 30 aneinander anliegen.

Beide Befestigungsabschnitte 48, 50 sind mit fluchtenden Durchgangslöchern versehen, so daß eine gemeinsame Öffnung 52 gebildet wird, die zur Befestigung an dem Metallbolzen 18 dient.

Der Metallbolzen 18 weist einen Fuß 54 und einen gegenüber dem Fuß 54 vorstehenden Gewindeabschnitt 56 auf, dessen Außendurchmesser an den Innendurchmesser der Öffnung 52 angepaßt ist.

Folglich kann die lagerichtig vormontierte Einheit aus Halter 12 und Körper 14 an dem Blech 16 montiert werden, in dem die Öffnung 52 auf den Gewindeabschnitt 56 aufgeschoben wird, bis der Halter 12 fest an dem Fuß 54 des Metallbolzens 18 anliegt. Anschließend wird die Kunststoffmutter 20 auf das gegenüber der Öffnung 52 vorstehende Ende des Gewindeabschnittes 56 aufgeschraubt oder aufgeschlagen, so daß die Befestigungsabschnitte 48, 50 fest zwischen dem Fuß 54 des Metallbolzens 18 und der Kunststoffmutter 20 eingespannt sind.

Dabei können die Befestigungsabschnitte 48, 50 beabstandet voneinander sein, wobei sie unter Wirkung der Kunststoffmutter 20 und der elastischen Beläge 32, 34 unter Spannung stehen, um den Körper 14 sicher zu halten. Bevorzugt ist es jedoch, daß die Befestigungsabschnitte 48, 50 im befestigten Zustand aneinander anliegen, wie es in Fig. 1 dargestellt ist.

Die Verbindungsabschnitte 40, 42 und 44, 46 sind an den jeweiligen Enden der Arme 24, 26 vorgesehen. Der Begriff des "Armendes" soll jedoch nicht ausschließen, daß an den jeweiligen Enden noch weitere Ansätze oder ähnliches vorhanden sind, die sich über die jeweiligen Verbindungsabschnitte hinaus erstrecken.

Die Form der Greifabschnitte 36, 38 ist an die Form des jeweiligen Körpers 14 angepaßt. Es versteht sich, daß bspw. bei einem Rundrohr als Körper 14 die Greifabschnitte 36, 38 daher etwa halbkreisförmig ausgebildet sind.

Die zweite Verbindung 30 kann anstelle einer Rastverbindung auch durch eine andere formschlüssige Verbindung gebildet sein, bspw. eine Verbindung mit Schließhebel, eine Schraubverbindung o. ä. Die erste Verbindung 28 kann bspw. auch durch ein Filmscharnier gebildet sein.

Anstelle eines Metallbolzens 18 mit Fuß 54 kann auch ein einfacher Bolzen mit Grobgewinde verwendet werden. In diesem Fall kann es zur Abstandssicherung von Vorteil sein, an den Befestigungsabschnitt 50 ein Distanzstück zu spritzen.

Fig. 2 zeigt eine alternative Ausführungsform eines erfindungsgemäßen Halters 60.

Der Halter 60 besteht aus zwei identischen Armen 62, 64, die jeweils aus Kunststoff hergestellt sind, aber auch aus Metall hergestellt sein können.

Die Arme 62, 64 sind gegeneinander um 180° versetzt und an einer ersten Verbindung 66 miteinander verbunden und an einer zweiten Verbindung 68, die identisch ausgebildet ist zu der ersten Verbindung 66.

Im dargestellten Ausführungsbeispiel sind die Verbindungen 66, 68 Rastverbindungen, wobei die Arme 62, 64 an einem Ende jeweils einen Rasthaken und am anderen Ende jeweils eine Rastvertiefung aufweisen.

Ferner weisen die Verbindungsabschnitte der Arme 62, 64 jeweils Durchbrechungen auf, so daß im Bereich der ersten und der zweiten Verbindung 66, 68 jeweils eine Öffnung 70 bzw. 72 vorgesehen ist, wie es in Fig. 2 schematisch angedeutet ist. Folglich kann der Halter 16 entweder an der Öffnung 70 oder der Öffnung 72 oder an beiden Öffnungen 70, 72 an einem jeweiligen Metallbolzen festgelegt werden, entsprechend dem Metallbolzen 18 der ersten Ausführungsform.

Bei dem Halter 16 liegen die Öffnungen 70, 72 jeweils außerhalb der Verbindungen 66, 68. Es versteht sich jedoch, daß bevorzugt eine Anordnung der Öffnungen 70, 72 zwischen den jeweiligen Verbindungen 66, 68 und den nicht näher bezeichneten Greifabschnitten der Arme 62, 64 ist.

In Fig. 3 ist eine Detailansicht einer weiteren alternativen Ausführungsform einer Befestigungsanordnung 80 dargestellt.

Wie bei der ersten Ausführungsform weist ein nicht näher bezeichneter Halter der Befestigungsanordnung 80 einen ersten und einen zweiten Arm 82, 84 auf, die an einem Metallbolzen 86 festgelegt sind.

Der Metallbolzen 86 ist ein sogenannter "Tannenbaum-Bolzen", mit sägezahnartigen Kreisvorsprüngen.

In einem Befestigungsabschnitt des zweiten Armes 84 ist ein Durchgangsloch 90 entsprechend dem Metallbolzen 86 vorgesehen. In dem Befestigungsabschnitt des ersten Armes 82 ist ein Sackloch 88 vorgesehen, das dem Metallbolzen 86 entspricht.

Bei dieser Ausführungsform ist keine separate Kunststoffmutter 20 vorgesehen. Statt dessen werden die Befestigungsabschnitte der Arme 62, 84 auf den Metallbolzen 86 aufgeschlagen, so daß dieser in die Löcher 88, 90 eindringt und sich dort festkrallt.

Obgleich die erste Ausführungsform der Fig. 1 hinsichtlich der Stabilität der Befestigung deutlich besser ist, ist die in Fig. 3 gezeigte alternative Ausführungsform für einige Anwendungsfälle hinreichend.

Es versteht sich, daß der nicht näher bezeichnete Halter der Befestigungsanordnung 80 Verbindungs- und Greifabschnitte entsprechend dem Halter 12 der ersten Ausführungsform oder dem Halter 60 der zweiten Ausführungsform aufweisen kann.

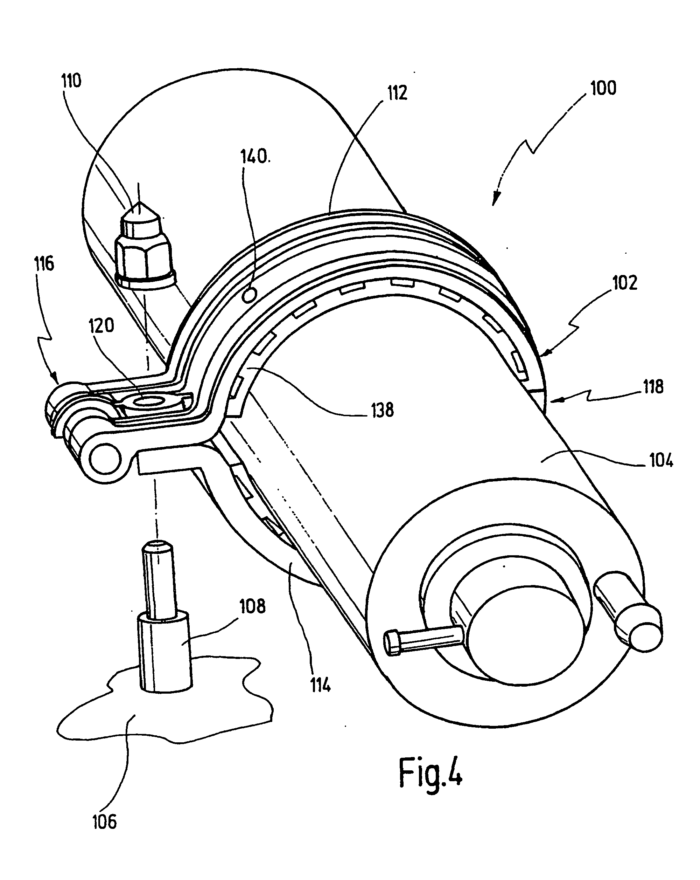

In den Fig. 4 bis 6 ist eine besonders bevorzugte Ausführungsform einer Befestigungsanordnung 100 gezeigt.

Die Befestigungsanordnung 100 weist einen Halter 102 auf, der dazu ausgelegt ist, einen Kraftstoff-Filter 104 an einem schematisch angedeuteten Rahmen (Karosserieblech) 106 festzulegen.

Die Befestigungsanordnung 100 entspricht in vielen Aspekten der Befestigungsanordnung 10 der ersten Ausführungsform. Die Beschreibung der Befestigungsanordnung 10 gilt daher überwiegend auch für die Befestigungsanordnung 100. Um Wiederholungen zu vermeiden, wird vorliegend lediglich auf die Unterschiede im Detail eingegangen.

An dem Rahmen 106 ist wie bei der ersten Ausführungsform ein Metallbolzen 108 im Bolzenschweißverfahren festgelegt.

Dieser dient gemeinsam mit einer Kunststoffmutter 110 dazu, den Halter 102 an dem Rahmen 106 festzulegen.

Der Halter 102 weist einen ersten Arm 112 und einen zweiten Arm 114 auf, die im Bereich einer ersten Verbindung 116 und im Bereich einer zweiten Verbindung 118 miteinander verbunden sind.

Zwischen nicht näher bezeichneten, etwa halbkreisförmigen Greifabschnitten des ersten und des zweiten Arms 112, 114 und der ersten Verbindung 116 ist eine Öffnung 120 für den Metallbolzen 108 vorgesehen.

Die Öffnung 120 ist durch zwei fluchtende Durchgangslöcher in Befestigungsabschnitten der Arme 112, 113 vorgesehen und stellt die einzige Befestigungsstelle des Halters 102 dar.

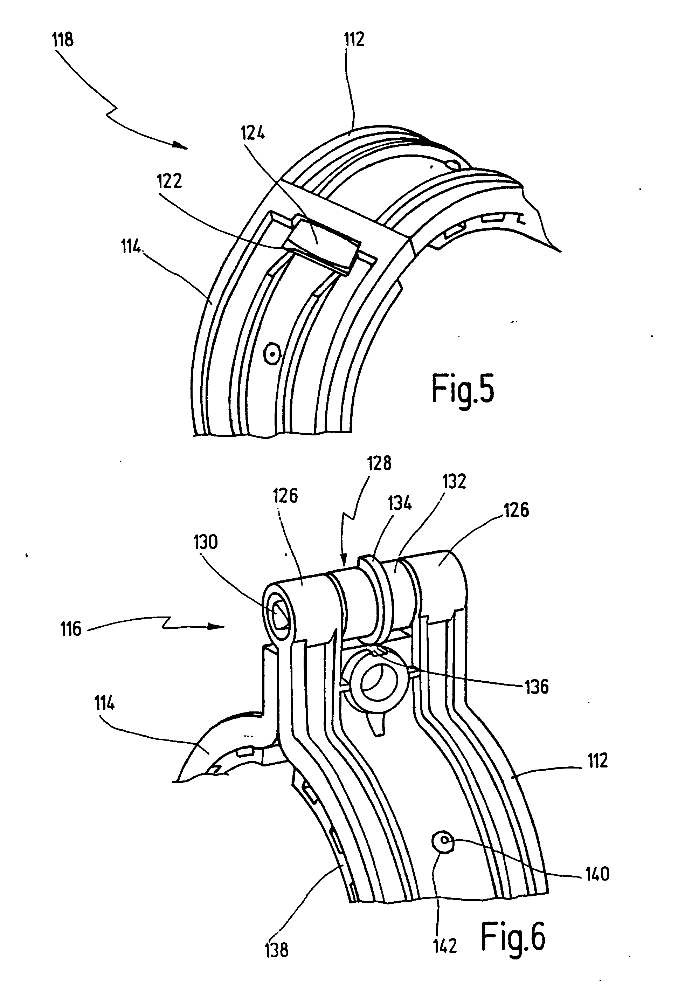

Die zweite Verbindung 118 ist eine Rastverbindung (Fig. 5), die gebildet wird durch eine Rastnase 124 an dem Ende des Arms 112 und eine entsprechende Aussparung 122 an dem gegenüberliegenden Ende des Arms 114.

Die erste Verbindung 116 ist, wie es in Fig. 6 gezeigt ist, als Gelenkverbindung ausgebildet.

Die Gelenkverbindung 116 ist gemeinsam mit den Armen 112, 114 in einem Spritzgußvorgang hergestellt. Die Gelenkverbindung 116 beinhaltet an dem Ende des ersten Armes 112 zwei voneinander beabstandete Ösen 126. Ferner beinhaltet die Gelenkverbindung 116 an dem Ende des zweiten Arms 114 einen T-Stift. Die T-Stiftenden 130 greifen in die voneinander beabstandeten Ösen 126. Ein mittlerer Teil 132 des T-Stiftes liegt zwischen den Ösen 126, so, daß die Arme 112, 114 unverlierbar miteinander gelenkig gekoppelt sind.

An dem mittleren Teil 132 des T-Stiftes 128 ist ferner eine radial vorstehende Führungsrippe 134 vorgesehen, die in eine entsprechend ausgebildete Führungsnut 136 greift. Die Führungsnut 136 ist an dem ersten Arm 112 im Bereich zwischen den Ösen 126 vorgesehen. Durch das Eingreifen der Führungsrippe 134 in die Führungsnut 136 wird verhindert, daß die Arme 112, 114 um eine Achse schräg oder senkrecht zu der Gelenkachse verdreht werden. Folglich wird hierdurch die Gelenkverbindung 116 geschont.

An den Armen 112, 114 ist ferner jeweils eine Mehrzahl von Löchern 142 in den jeweiligen Greifabschnitten vorgesehen. In die Löcher 142 greifen jeweilige Anker 140 von elastischen Belägen 138. Die Beläge 138 weisen jeweils zu dem Filter 104 hinweisende durchgehende Flächen und Stege auf, die zu den Armen 112, 114 hinweisen. Folglich sind zwischen den Armen 112, 114 und den durchgehenden Abschnitten der Beläge 138 Luftkammern gebildet, so daß die Beläge eine hohe Elastizität besitzen.

Auch bei der Befestigungsanordnung 100 läßt sich der Halter 102 an dem Kraftstoff-Filter 104 lagerichtig vormontieren, so daß Kraftstoff-Filter 104 und Halter 102 eine vormontierte Einheit bilden, die als ein jeweiliges Teil gehandhabt und bevorratet werden kann.

Durch den Reibkontakt zwischen den Belägen 138 und dem Filter 104 und die auf die Beläge 138 aufgebrachte Spannung bei geschlossener Rastverbindung 118 ist gewährleistet, daß der Halter 102 im vormontierten Zustand nicht gegenüber dem Filter 104 verrutscht.

## Patentansprüche

1. Halter (12; 60; 80; 102) für einen Körper (14; 104), vorzugsweise für ein Kraftstoff-Filter (104) für ein Kraftfahrzeug, mit zwei Armen (24, 26; 62, 64; 82, 84; 112, 114), die dazu ausgelegt sind, den Körper (14; 104) zusammen zu umschließen, wobei die Arme an ihrem jeweiligen ersten Ende mittels einer ersten Verbindung (28; 66; 116) und an ihrem jeweiligen zweiten Ende mittels einer zweiten Verbindung (30; 68; 118) formschlüssig miteinander verbindbar sind, und mit Befestigungsmitteln (52; 70; 72; 120), um die miteinander verbundenen, den Körper einschließenden Arme (24, 26; 62, 64; 82, 84; 112, 114) an einem Rahmen (16; 106), vorzugsweise an dem Kraftfahrzeug, festzulegen,
**dadurch gekennzeichnet, daß**
die Befestigungsmittel eine Öffnung (52; 70; 72; 120) in den Armen (24, 26; 62, 64; 82, 84; 112, 114) aufweisen, die im Bereich der ersten Verbindung (28; 66; 116) angeordnet ist und in die ein Befestigungselement (18; 86; 108) einführbar ist, das mit dem Rahmen (16; 106) verbindbar ist und mittels dessen die erste Verbindung (28; 66; 116) gegen Lösen gesichert werden kann.

2. Halter nach Anspruch 1, **dadurch gekennzeichnet, daß** die Arme (24, 26; 62, 64; 82, 84; 112, 114) jeweils aus Kunststoff hergestellt sind.

3. Halter nach Anspruch 2, **dadurch gekennzeichnet, daß** die Arme (24, 26; 62, 64; 82, 84; 112, 114) im Spritzgußverfahren hergestellt sind.

4. Halter nach Anspruch 2 oder 3, **dadurch gekennzeichnet, daß** Mittel (126, 128) zum Herstellen der ersten oder der zweiten Verbindung (116) der Arme (112, 114) gemeinsam mit den Armen (112, 114) in einem einzigen Formgebungsvorgang, insbesondere Spritzgußvorgang hergestellt sind, derart, daß die Arme (112, 114) nach dem Formgebungsvorgang unlösbar miteinander gekoppelt sind.

5. Halter nach Anspruch 4, **dadurch gekennzeichnet, daß** die Mittel (126, 128) zum Herstellen der ersten oder der zweiten Verbindung (116) der Arme (112, 114) durch ein Gelenk (126, 128) gebildet sind, das gemeinsam mit den Armen (112, 114) in einem einzigen Formgebungsvorgang, insbesondere Spritzgußvorgang hergestellt ist.

6. Halter nach einem der Ansprüche 1 - 5, **dadurch gekennzeichnet, daß** ein Gelenk (42, 44; 126, 128) die erste Verbindung (28; 116) bildet, und daß die zweite Verbindung (30; 118) eine Rastverbindung (44, 46; 122, 124) ist.

7. Halter nach einem der Ansprüche 1 - 3, **dadurch gekennzeichnet, daß** die Arme (62, 64) in getrennten Formgebungsvorgängen hergestellt sind und daß die Form der zwei Arme (62, 64) identisch ist.

8. Halter nach einem der Ansprüche 1 - 7, **dadurch gekennzeichnet, daß** die Arme (24, 26; 112, 114) an ihrer zu dem Körper (14; 104) hin weisenden Seite wenigstens teilweise mit einem Belag (32, 34; 138) ausgestattet sind.

9. Halter nach Anspruch 8, **dadurch gekennzeichnet, daß** der Belag (32, 34; 138) aus einem Kunststoff hergestellt ist, der vorzugsweise elastischer ist als ein Material, aus dem die Arme (24, 26; 112, 114) hergestellt sind.

10. Halter nach Anspruch 8 oder 9, **dadurch gekennzeichnet, daß** die Arme (24, 26) und der Belag (32, 34) in einem einzigen Formgebungsvorgang, insbesondere einem Zwei-Komponenten-Spritzgußvorgang hergestellt sind.

11. Halter nach einem der Ansprüche 1 - 10, **dadurch gekennzeichnet, daß** die Öffnung (52; 120) zwischen der ersten Verbindung (28; 116) und dem Teil der Arme (24, 26; 112, 114) angeordnet ist, der den Körper (14; 104) umschließt.

12. Befestigungsanordnung (10; 100) mit einem Metallbolzen, (18; 86; 108) der gegenüber einem Metallblech (16; 106) vorsteht und an dem ein Halter (12; 60; 80; 102) für einen Körper (14; 104) festgelegt ist, **dadurch gekennzeichnet, daß** der Halter ein Halter (12; 60; 80; 102) nach einem der Ansprüche 1 - 11 ist und der Metallbolzen (18; 86; 108) in die Öffnung (50; 70, 72; 120) in den Armen (24, 26; 62, 64; 82, 84; 112, 114) eingeführt ist.

13. Befestigungsanordnung nach Anspruch 12, **dadurch gekennzeichnet, daß** die Öffnung (52; 120) durchgehend durch beide Arme (24, 26; 112, 114) ausgebildet ist, daß der Metallbolzen (18; 108) ein Gewindebolzen (18; 108), insbesondere ein Grobgewindebolzen ist; und daß der Halter (12; 102) an dem Metallbolzen (18; 108) durch eine Mutter (20; 110) gesichert ist, die auf ein gegenüber der Öffnung (52; 120) vorstehendes Ende des Gewindebolzens (18; 108) aufgebracht ist.

14. Befestigungsanordnung nach Anspruch 13, **dadurch gekennzeichnet, daß** die Mutter (20; 110) eine Kunststoffmutter, vorzugsweise eine glasfaserverstärkte Kunststoffmutter ist.

## Claims

1. Holder (12; 60; 80; 102) for an object (14; 104), preferably for a fuel filter (104) for a motor vehicle, having two arms (24, 26; 62, 64; 82, 84; 112, 114) designed to enclose together the object (14; 104), the arms being positively connectable to each other at their respective first end by means of a first connection (28; 66; 116) and at their respective second end by means of a second connection (30; 68; 118), and having fastening means (52; 70; 72; 120) to fix the interconnected arms (24, 26; 62, 64; 82, 84; 112, 114) encompassing the object to a frame (16; 106), preferably to the motor vehicle,
**characterized in that**
the fastening means comprise an opening (52; 70; 72; 120) in the arms (24, 26; 62, 64; 82, 84; 112, 114) arranged in the region of the first connection (28; 66; 116), into which openings a fastening element (18; 86; 108) is introducible that is connectable to the frame (16; 106) and by means of which the first connection (28; 66; 116) can be secured against loosening.

2. Holder according to claim 1, **characterized in that** the arms (24, 26; 62, 64; 82, 84; 112, 114) are each made of plastic.

3. Holder according to claim 2, **characterized in that** the arms (24, 26; 62, 64; 82, 84; 112, 114) are produced by the injection molding process.

4. Holder according to claim 2 or 3, **characterized in that** means (126, 128) to produce the first or the second connection (116) of the arms (112, 114) are produced jointly with the arms (112, 114) in a single shaping operation, in particular an injection molding operation, such that the arms (112, 114) are undetachably coupled to each other after the shaping operation.

5. Holder according to claim 4, **characterized in that** the means (126, 128) of producing the first or the second connection (116) of the arms (112, 114) are made up of an articulation (126, 128) produced jointly with the arms (112, 114) in a single shaping operation, in particular an injection molding operation.

6. Holder according to any of claims 1 to 5, **characterized in that** an articulation (42, 44; 126, 128) forms the first connection (28; 116) and **in that** the second connection (30; 118) is an arrest connection (44, 46; 122, 124).

7. Holder according to any of claims I to 3, **characterized in that** the arms (62, 64) are produced in separate shaping operations and **in that** the shape of the two arms (62, 64) is identical.

8. Holder according to any of claims I to 7, **characterized in that** the arms (24, 26; 112, 114) on their side towards the object (14; 104) are at least partly equipped with a covering (32, 34; 138).

9. Holder according to claim 8, **characterized in that** the covering (32, 34; 138) is made of a plastic, preferably more elastic than a material of which the arms (24, 26; 112, 114) are made.

10. Holder according to claim 8 or 9, **characterized in that** the arms (24, 26) and the covering (32, 34) are produced in a single shaping operation, in particular a two-component injection molding operation.

11. Holder according to any of claims 1 to 10, **characterized in that** the opening (52; 120) is arranged between the first connection (28; 116) and the part of the arms (24, 26; 112, 114) enclosing the object (14; 104).

12. Fastening apparatus (10; 100) having a metal pin (18; 86; 108) projecting relative to a metal sheet (16; 106) and to which pin a holder (12; 60; 80; 102) for an object (14; 104) is fixed, **characterized in that** the holder is a holder (12; 60; 80; 102) according to any of claims 1 to 11 and the metal pin (18; 86; 108) is introduced into the opening (50; 70, 72; 120) in the arms (24, 26; 62, 64; 82, 84; 112, 114).

13. Fastening apparatus according to claim 12, **characterized in that** the opening (52; 120) is formed throughout by the two arms (24, 26; 112, 114), **in that** the metal pin (18; 108) is a threaded bolt (18; 108), in particular a coarse-threaded bolt, and **in that** the holder (12; 102) is secured to the metal pin (18; 108) by a nut (20; 110) placed on an end, projecting relative to the opening (52; 120), of the threaded bolt (18; 108).

14. Fastening apparatus according to claim 13, **characterized in that** the nut (20; 110) is a plastic nut, preferably a glass-fiber reinforced plastic nut.

## Revendications

1. Dispositif de retenue (12;60;80;102) pour un corps (14;104), de préférence pour un filtre à carburant (104) pour un véhicule automobile, comportant deux bras (24,26;62,64;82,84; 112,114), qui sont agencés de manière à entourer conjointement le corps (14;104), dans lequel les bras peuvent être reliés entre eux selon une liaison par formes complémentaires au niveau de leurs premières extrémités respectives au moyen d'une première liaison (28;66;116) et au niveau de leurs secondes extrémités respectives au moyen d'une seconde liaison (30;68; 118), et comportant des moyens de fixation (52;70;72;120) pour fixer les bras (24,26;62,64;82,84;112,114), qui sont reliés entre eux et enserrent le corps, à un châssis (16;106), de préférence sur le véhicule automobile,
**caractérisé en ce que**
les moyens de fixation comportent une ouverture (52;70;72;120) aménagée dans les bras (24,26;62,64;82,84; 112,114) et qui est disposée dans la zone de la première liaison (28; 66;116) et dans laquelle peut être introduit un élément de fixation (18;86;108), qui peut être relié au cadre (16;106) et au moyen duquel la première liaison (28;66;116) peut être bloquée vis-à-vis d'un détachement.

2. Dispositif de retenue selon la revendication 1, **caractérisé en ce que** les bras (24,26;62,64;82,84; 112,114) sont réalisés respectivement en matière plastique.

3. Dispositif de retenue selon la revendication 2, **caractérisé en ce que** les bras (24,26;62,64;82, 84;112,114) sont réalisés au moyen du procédé de moulage par injection.

4. Dispositif de retenue selon la revendication 2 ou 3, **caractérisé en ce que** des moyens (126,128) pour réaliser la première liaison ou la seconde liaison (116) des bras (112,114) sont fabriqués conjointement avec les bras (112,114) lors d'un seul processus de formage, notamment un processus de moulage par injection, de telle sorte que les bras (112,114) sont couplés entre eux de façon inamovible après le processus de formage.

5. Dispositif de retenue selon la revendication 4, **caractérisé en ce que** les moyens (126,128) pour établir la première ou la seconde liaison (116) des bras (112,114) sont formés par une articulation (126,128), qui est fabriquée conjointement avec les bras (112,114) en un seul processus de formage, notamment un processus de moulage par injection.

6. Dispositif de retenue selon l'une des revendications 1 à 5, **caractérisé en ce qu'**une articulation (42,44;126, 128) forme la première liaison (28;116) et **en ce que** la seconde liaison (30;118) est une liaison à encliquetage (44,46;122,124).

7. Dispositif de retenue selon l'une des revendications 1 à 3, **caractérisé en ce que** les bras (62,64) sont fabriqués selon des processus séparés de formage et **en ce que** les deux bras (62,64) ont des formes identiques.

8. Dispositif de retenue selon l'une des revendications 1 à 7, **caractérisé en ce que** les bras (24,26;112,114) sont équipés au moins en partie d'un revêtement (32,34;138), au niveau de leur côté tourné vers le corps (14;104).

9. Dispositif de retenue selon la revendication 8, **caractérisé en ce que** le revêtement (32,34;138) est réalisé en une matière plastique qui est de préférence plus élastique qu'un matériau dont sont constitués les bras (24,26;112,114).

10. Dispositif de retenue selon la revendication 8 ou 9, **caractérisé en ce que** les bras (24,26) et le revêtement (32, 34) sont réalisés en un seul processus de formage, notamment un processus de moulage par injection à deux constituants.

11. Dispositif de retenue selon l'une des revendications 1 à 10, **caractérisé en ce que** l'ouverture (52;120) est disposée entre la première liaison (28;116) et la partie des bras (24,26;112,114), qui entoure le corps (14;104).

12. Dispositif de fixation (10;100) comportant un boulon métallique (18;86;108), qui fait saillie par rapport à une tôle métallique (16;106) et sur lequel est fixé un dispositif de retenue (12;60;80;102) pour un corps (14;104), **caractérisé en ce que** le dispositif de retenue est un dispositif de retenue (12;60;80;102) selon l'une des revendications 1 à 11 et **en ce que** le boulon métallique (18;86;108) est introduit dans l'ouverture (50;70,72;120) formée dans les bras (24,26;62,64;82,84;112, 114).

13. Dispositif de fixation selon la revendication 12, **caractérisé en ce que** l'ouverture (52;120) est agencée de manière à traverser les deux bras (24,26;112,114), que le boulon métallique (18;108) est un goujon fileté (18,108), notamment un goujon à filetage grossier, et **en ce que** le dispositif de retenue (12;102) est bloqué sur le boulon métallique (18;108) au moyen d'un écrou (20;110), qui est monté sur une extrémité, qui fait saillie par rapport à l'ouverture (52;120), du goujon fileté (18;108).

14. Dispositif de fixation selon la revendication 13, **caractérisé en ce que** l'écrou (20;110) est un écrou en matière plastique, de préférence un écrou en matière plastique renforcée par des fibres de verre.
